**Europäisches Patentamt**

**European Patent Office**

**Office européen des brevets**

(19)

(11) Veröffentlichungsnummer : **0 331 976 B1**

(12) **EUROPÄISCHE PATENTSCHRIFT**

(45) Veröffentlichungstag der Patentschrift :
**19.02.92 Patentblatt 92/08**

(21) Anmeldenummer : **89103113.0**

(22) Anmeldetag : **22.02.89**

(51) Int. Cl.⁵ : **F16M 11/10**

(54) Geräteträger.

(30) Priorität : **11.03.88 DE 3808233**

(43) Veröffentlichungstag der Anmeldung :
**13.09.89 Patentblatt 89/37**

(45) Bekanntmachung des Hinweises auf die
Patenterteilung :
**19.02.92 Patentblatt 92/08**

(84) Benannte Vertragsstaaten :
**AT CH DE ES FR GB IT LI**

(56) Entgegenhaltungen :
**WO-A-85/01648**
**DE-A- 2 831 428**
**FR-A- 1 007 058**
**US-A- 4 616 218**

(73) Patentinhaber : **Knürr Mechanik für die**
**Elektronik AG**
**Schatzbogen 29**
**W-8000 München 82 (DE)**

(72) Erfinder : **Simon, Peter**
**Stroblstrasse 42**
**W-8000 München 21 (DE)**

(74) Vertreter : **Weber, Otto Ernst, Dipl.-Phys. et al**
**Weber & Heim Hofbrunnstrasse 36**
**W-8000 München 71 (DE)**

EP 0 331 976 B1

## Beschreibung

Die Erfindung betrifft einen Geräteträger für mindestens ein ferät, beispielsweise für einen Monitor oder ein Meßgerät, mit zwei, in einem vorgegebenen Abstand an einem Bodenrahmen befestigten, vertikalen Saülen, zwischen denen mindestens eine höhen- und neigungsverstellbare und unter verschiedenen Neigungswinkeln arretierbare Aufnahmeplatte angeordnet ist.

Derartige Geräteträger werden in großer Anzahl in Labors und Büros eingesetzt. Sie dienen üblicherweise zur Aufnahme von Meßgeräten, Sichtgeräten oder Anzeige-Einheiten. Durch die Neigungsverstellbarkeit ist eine ergonomisch richtige Anordnung möglich, d.h. die für den Bediener oder Betrachter relevanten Elemente können mit der optimalen Neigung angeordnet werden.

Bekannte Geräteträger stützen sich auf einer zentralen Säule ab, an deren freien Ende die Aufnahmeplatte angelenkt ist. Wenngleich diese Konstruktionen in vielen Fällen sehr zufriedenstellend eingesetzt werden können, sind sie dennoch insbesonders für sehr schwere Geräte nicht geeignet, da sie nicht ausreichend standfest sind. Bei schwergewichtigen oder großvolumigen Geräten besteht die Gefahr, daß sie der Belastung nicht standhalten oder daß sie leicht aus dem Gleichgewicht gebracht werden können.

Aus der WO-A-85 01 648 ist ein Geräteständer für ein Bildschirmgerät bekannt, der eine U-förmige Halterung zwischen zwei telekopierbaren Trägerstangen aufweist. Die Höhenverstellung erfolgt mit Hilfe eines Gegengewichtes und ist nur in einem begrenzten Bereich möglich, weil die Schwenkachse durch jeweils einen Schwenkbolzen und einen Drehknopf gebildet ist, die durch die äußeren Teleskopstangen geführt sind. Eine Arretierung erfolgt über eine Halteschraube und einen bogenförmigen Schlitz in den vertikalen Schenkeln der U-förmigen Halterung. Eine aufwendige Mechanik, die in der Bodenplatte angeordnet ist, ermöglicht das Schwenken des Ständers um eine vertikale Achse.

Dieser Geräteständer ist nur als Tischständer zu verwenden und dient lediglich zur Aufnahme eines einzigen Gerätes.

Der Erfindung liegt die Aufgabe zugrunde, einen Geräteträger zu schaffen, der mehr als eine Aufnahmeplatte jeweils höhen- und neigungsverstellbar aufnehmen kann und der auch bei Belastung mit schweren Geräten ausreichend standfest ist.

Erfindungsgemäß wird die Aufgabe durch die kennzeichnenden Merkmale des Anspruchs 1 gelöst.

Die Erfindung hat den Vorteil, daß durch die beiden Saülen eine sichere Abstützung je der Aufnahmeplatte und des darauf angeordneten Gerätes gewährleistet ist, wobei durch den schwergewichtigen Bodenrahmen der Schwerpunkt der gesamten Anordnung tief gelegt ist. Ferner liegt der Schwerpunkt des Gerätes aufgrund der Pendelaufhängung unterhalb der Schwenkachse, so daß die Aufnahmeplatte bzw. das darauf angeordnete Gerät keine kritische instabile Lage einnehmen kann. Falls die Arretiereinrichtung von einer Bedienperson gelöst sein sollte und beispielsweise dann eine unsachgemäße Handhabung erfolgen sollte, würde die Aufnahmeplatte selbsttätig eine stabile Lage einnehmen, ohne daß die Geräteanordnung in irgendeiner Weise gefährdet ist. Außerdem stellen die beiden Säulen einen seitlichen Schutz für das betreffende Gerät dar, da sie den Raum über der Aufnahmeplatte auf zwei Seiten ähnlich wie ein Schutzbügel überspannen.

Ein Vorteil der Erfindung besteht darin, daß die Gelenke der Pendelarme an den Säulen höhenverstellbar angeordnet sind. Dies ist auf einfache Weise dadurch möglich, daß Gelenke jeweils einen als Pendelachse dienenden horizontal angeordneten Bolzen umfassen und daß diese Bolzen an den zugehörigen Säulen lösbar befestigt sind.

Bevorzugt sind die holzen an den Säulen verschraubt. Zur stufenweisen Höhenverstellung sind die Säulen mit in Abständen übereinander angeordneten Schraublöchern versehen Um einz individuelle Höheneinstellung zu gewährleisten, kann es zweckmäßig sein, daß jede Säule mit einer vertikal verlaufenden Befestigungsnut versehen ist, und daß die Bolzen in der Befestigungsnut lösbar festgeklemmt sind. Es müssen daher zur Höhenverstellung lediglich die beiden Bolzen in der Weise gelöst werden, daß sie in den Befestigungsnuten in die gewünschte Position verschoben werden können, wo sie dann durch Anziehen wieder festgeklemmt werden.

Ferner ist es vorteilhaft, daß an der Aufnahmeplatte mindestens ein parallel zur Pendelachse auslenkbarer Riegel zum Eingriff an einem säulenseitigen Gegenstück vorhanden ist, mit welchem die Aufnahmeplatte wahlweise unter unterschiedlichen Neigungswinkeln arretierbar ist. Bevorzugt ist eine zweite derartige Arretiervorrichtung vorhanden, so daß die Bodenplatte bezüglich ihrer Neigung an beiden Säulen abgestützt werden kann.

Eine besonders betriebssichere Arretierung wird dadurch erreicht, daß das Riegel-Gegenstück als Lochplatte ausgebildet ist, in deren Lochungen der zugehörige Riegel zur stufenweisen Neigungsstellung eingreift.

Erfindungs gemäß ist vorgesehen, daß das säulenseitige Riegel-Gegenstück auf einem Träger angeordnet ist, welcher mit dem zugehörigen Bolzen der Pendelaufhängung schiebefest verbunden ist.

Um sicherzustellen, daß die Pendelbewegung nicht behindert wird, ist es zweckmäßig, daß die Pendelarme jeweils in einem Gehäuse angeordnet sind, welches auf dem Träger ausgebildet ist. Durch diese Maßnahme kann der Geräteträger auch optisch sehr ansprechend gestaltet werden.

Es erweist sich dabei als zweckmäßig, daß die der Aufnahmeplatte zugewandte Gehäuse-Frontseite mit einer Öffnung versehen ist, über welche das freie Ende des betreffenden Pendelarms zur Aufnahmeplatte herausgeführt ist, und durch welche der betreffende Riegel in das Gehäuse zum Eingriff in das Gegenstück geführt ist. Die Öffnung kann auch die Funktion haben, den Pendelhub zu begrenzen.

Eine Drehung der Aufnahmeplatte um eine vertikale Achse wird auf einfache Weise dadurch ermöglicht, daß der Bodenrahmen mit Laufrollen versehen ist.

Die mechanische Belastbarkeit des Geräteträgers wird ferner dadurch weiter unterstützt, daß die beiden gegenüberliegenden Träger unterhalb der Aufnahmeplatte mit einem Querholm gegeneinander abgestützt sind. Auf diese Weise werden die beiden Säulen in Höhe des zu tragenden Gerätes quer versteift. Durch die Anordnung des Querholms an den Trägern wird diese Querversteifung auch bei jeder Höhenverstellung mitgeführt, ohne daß der Bediener hierfür eigens tätig werden muß.

Die bei einer Neigung bzw. Auslenkung der Aufnahmeplatte entstehenden Kräfte werden bevorzugt dadurch auf die Säulen übertragen, daß die Träger die Säulen quer zur Pendelrichtung auf zwei Seiten formschlüssig hintergreifen.

Die Betätigung der beiden Riegel wird dadurch erleichtert, daß sie mit einem gemeinsamen Betätigungshebel in Eingriff stehen, der an einer Frontseite der Aufnahmeplatte angeordnet ist. Durch Betätigung dieses Hebels können die beiden Riegel gegensinnig ausgelenkt werden.

Im Hinblick auf den Bedienungskomfort ist es ferner vorteilhaft, daß der Riegel-Betätigungshebel in Fingerreichweite einer Handhabe für die Aufnahmeplatte angeordnet ist. Das hat den Vorteil, daß mit einer Hand sowohl die Riegel ausgelöst als auch die Positionierung der Aufnahmeplatte kontrolliert vorgenommen werden können.

Nachfolgend wird die Erfindung anhand eines Ausführungsbeispiels weiter beschrieben.

Fig. 1 zeigt schematisch eine Seitenansicht eines Geräteträgers;

Fig. 2 zeigt schematisch eine Frontalansicht des Geräteträgers gemäß Fig. 1;

Fig. 3 zeigt eine Aufsicht auf eine Aufnahmeplatte des Geräteträgers und

Fig. 4 zeigt schematisch eine Explosionsdarstellung einer Einzelheit des Geräteträgers.

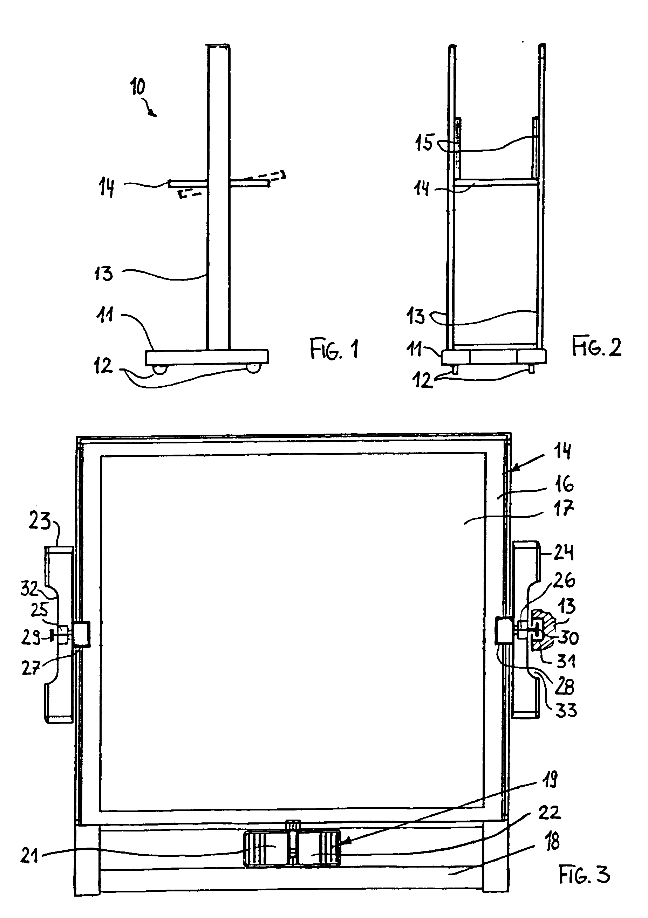

Wie die Fig. 1 und 2 veranschaulichen, besteht ein in seiner Gesamtheit mit "10" bezeichneter Geräteträger aus einem Bodenrahmen 11 mit Laufrollen 12, über welche der Geräteträger 10 auf einer Stellfläche, beispielsweise dem Fußboden, frei bewegbar ist. Auf dem Bodenrahmen 11 sind zwei vertikale Säulen 13 in vorgegebenem Abstand voneinander angeordnet, so daß eine im wesentlichen gabelartige Anordnung gebildet wird.

Zwischen den beiden Säulen 13 ist eine Aufnahmeplatte 14 an zwei Pendelarmen 15 (Fig. 2) aufgehängt, die an den beiden Säulen 13 um eine horizontale Achse schwenkbar angelenkt sind. Durch eine Auslenkung der Pendelarme 15 kann die Aufnahmeplatte 14 wahlweise geneigt werden. In Fig. 1 ist eine geneigte Position gestrichelt veranschaulicht. Die Aufnahmeplatte 14 mit den Pendelarmen 15 ist über die gesamte Länge der Säulen höhenverstellbar gelagert. Die beiden Figuren verdeutlichen, daß grundsätzlich mehrere derartiger an Pendelarme 15 aufgehängte Aufnahmeplatten 14 zwischen zwei Säulen 13 angeordnet werden können. Ebenso ist es ohne weiteres möglich, festehende Regalböden oder ähnliches (nicht dargestellt) zwischen den Säulen 13 anzuordnen. Auf diese Weise kann praktisch ein Geräteturm zusammengestellt werden, wobei die Säulen 13 bis zu 2 m hoch sein können. Um eine ausreichende Standfestigkeit zu erreichen, ist der Bodenrahmen 11 schwergewichtig aus Metallguß hergestellt. Auf diese Weise liegt der Schwerpunkt der gesamten Anordnung relativ tief, selbst wenn auch die auf dem Geräteträger angeordneten Geräte (nicht dargestellt) ein großes Eigengewicht aufweisen.

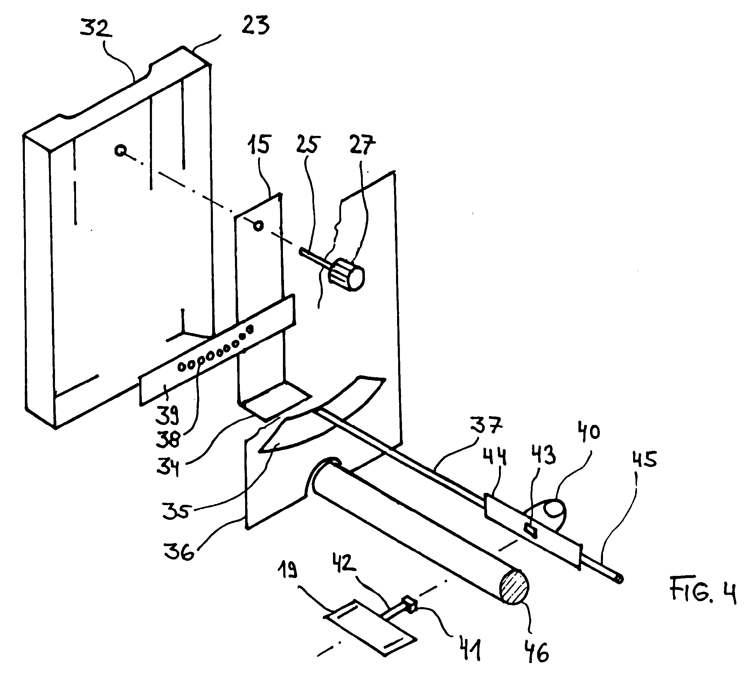

Die Fig. 3 veranschaulicht eine Aufsicht auf die Aufnahmeplatte 14 und ihre Aufhängung. Die sich in der Zeichenebene erstreckende Aufnahmeplatte 14 umfaßt im wesentlichen einen metallischen Rahmen 16 und eine oberflächenbündig abschliessende Füllung 17. An einer Frontseite, d.h. in Schwenkrichtung, befindet sich eine stabförmige Handhabe 18, die sich in einem vorgegebenen Abstand über die gesamte Breite der Aufnahmeplatte 14 erstreckt. In dem Zwischenraum zwischen der Handhabe 18 und der Aufnahmeplatte 14 ist eine zentrisch gelagerte doppelflügelige Betätigungsvorrichtung 19 angeordnet, die zum Betätigen eines Querriegels dient, der im einzelnen in Fig. 4 beschrieben ist. Die beiden Flügel 22, 21 sind aus der Zeichenebene heraus auslenkbar, indem die Bedienperson beispielsweise gleichzeitig die Aufnahmeplatte 14 über die Handhabe 18 festhält oder auslenkt.

In dem in Fig. 3 dargestellten Beispiel befinden sich die Pendelarme jeweils im Innern eines Trägers 23,24, welcher an der zugehörigen Säule höhenverstellbar verschraubt wird. Dies erfolgt mit Hilfe eines horizontal angeordneten Bolzens 25 bzw. 26, an welchem auch die Pendelarme aufgehängt sind. Die Bolzen 25,26 sind einerseits mit einer von aussen bedienbaren Rändelmutter 28 und andererseits mit einem Kopf 29 bzw. 30 zum höhenverstellbaren Eingriff mit jeweils einer vertikal verlaufenden Nut 31 in der zugehörigen Säule 13 versehen. Um die Darstellung übersichtlich zu halten, ist eine Nut 31 lediglich auf der rechten Figurenseite anhand eines Teilquerschnitts durch die betreffende Säule 13 veranschaulicht. Sinngemäß gelten die hierzu gemachten Ausführungen auch für die Seite mit dem Bolzen 25.

Die Nut 31 ist mit zwei L-Schenkeln versehen, welche den Kopf 30 hintergreifen. Durch Drehung der Rändelmutter 28 wird der Bolzen 26 mit dem Kopf 30 an den L-Schenkeln verklemmt bzw. gelöst. Da sich die Nut 31 über die gesamte Länge der Säule 13 erstreckt, kann die Aufnahmeplatte 14 in jede beliebige Höhe verschoben und dort fixiert werden.

Die Träger 23,24 sind säulenseitig mit einer halboffenen, in Richtung der Säulen verlaufenden Ausnehmung 32,33 versehen, welche die zugehörigen Säulen 13 formschlüssig umfassen. In Fig. 3 verlaufen die Ausnehmungen 32,33 senkrecht zur Zeichenebene, d.h. sie sind aufgrund des Formschlusses gegen eine Bewegung in der Zeichenebene, insbesondere in Schwenkrichtung der Aufnahmeplatte 14 fixiert.

Die Fig. 4 zeigt, auf welche Weise der Träger 23 sowie der zugehörige Pendelarm 15 mittels des Bolzens 25 aufgehängt sind. Der Träger 23 ist als Gehäuse ausgeformt, in welchem der Pendelarm 15 auslenkbar ist. Der Pendelarm 15 ist an seinem freien Ende mit einem Auflager 34 versehen, an welchem die Aufnahmeplatte 14 befestigt ist. Das Auflager 34 ist durch eine Öffnung 35 in einem Gehäusedeckel 36 nach außen geführt. Die Öffnung 35 dient somit auch als Begrenzung für eine Schwenkbewegung bzw. Pendelbewegung.

Durch die Öffnung 35 ist ferner ein Querriegel 37 geführt, der an der Aufnahmeplatte, die in dieser Figur nicht dargestellt ist, gelagert ist. Er greift mit seinem freien Ende lösbar wahlweise in eine der Lochungen 38 in einem plattenförmigen Riegel-Gegenstück 39 ein, welches am Träger 23 befestigt ist. Mit Hilfe des Querriegels 37 und der Lochungen 38 ist die Aufnahmeplatte 14 wahlweise mit verschiedenen Auslenkungen bzw. Neigungen arretierbar.

Der Riegel 37 ist in dem hier gezeigten Beispiel über eine Schenkelfeder 40 vorgespannt, so daß er selbsttätig in eine der Lochungen 38 einrastet. Ausgelenkt wird er mit Hilfe eines Nockens 41 an der Schwenkachse 42 der Betätigungsvorrichtung 19. Der Nocken 41 greift in eine entsprechend geformte Ausnehmung 43 an einer Steuerplatte 44 des Riegels 37 an.

In Verlängerung des Querriegels 37 befindet sich ein weiterer Querriegel 45, der mit einer zwar spiegelverkehrten, aber ansonsten gleichartigen Anordnung zusammenwirkt, die sich im Innern des Trägers 24 (Fig. 3) befindet.

Die beiden Querriegel 37,45 sowie die zugehörigen Bauteile befinden sich unterhalb der Führung 17 (Fig. 3). Sie können nach unten abgedeckt sein.

Unterhalb der Aufnahmeplatte verläuft ein Querholm 46 zwischen den beiden Trägern 23,24, welcher diese gegeneinander abstützt.


## Patentansprüche

1. Geräteträger für mindestens ein Gerät, beispielsweise für einen Monitor oder ein Meßgerät, mit zwei, in einem vorgegebenen Abstand an einem Bodenrahmen (11) befestigten, vertikalen Säulen (13), zwischen denen mindestens eine höhen- und neigungsverstellbare und unter verschiedenen Neigungswinkeln arretierbare Aufnahmeplatte (14) angeordnet ist,
dadurch **gekennzeichnet,**
daß jede Aufnahmeplmatte (14) auf zwei, jeweils an den Säulen (13) anlenkbaren Pendelarmen (15) aufliegt, daß die Pendelarme (15) in gehäuseartigen Trägern (23,24) angeordnet sind, die zwischen jeder Aufnahmeplatte (14) und den Saülen (13) angeordnet und zusammen mit den Pendelarmen (15) über horizontale Bolzen (25,26) höhenverstellbar sind, daß mindestens an einem gehäuseartigen Träger (23,24) ein Riegel-Gegenstück (39) befestigt ist, in das ein an der Aufnahmeplatte (14) gelagerter, parallel zur Pendelachse auslenkbarer Riegel (37,45) zur Arretierung der Aufnahmeplatte (14) wahlweise unter unterschiedlichen Neigungswinkeln lösbar eingreift.

2. Geräteträger nach Anspruch 1,
dadurch **gekennzeichnet,**
daß die der Aufnahmeplatte (14) zugewandte Seite (36) des gehäuseartigen Trägers (23,24) mit einer Öffnung (35) versehen ist, durch welche das freie Ende des zugehörigen Pendelarms (15) als Auflager (34) für die Aufnahmeplatte (14) herausgeführt ist und durch welche der zugehörige, parallel zur Pendelachse auslenkbare Riegel (37,45) in das Gehäuse zum Eingriff in das Riegel-Gegenstück (39) geführt ist.

3. Geräteträger nach Anspruch 1 oder 2,
dadurch **gekennzeichnet,**
daß die Öffnungen (35) als Begrenzung für eine Pendelbewegung bzw. Neigung der Aufnahmeplatte (14) ausgebildet sind.

4. Geräteträger nach einem der Ansprüche 1 bis 3,
dadurch **gekennzeichnet,**

EP 0 331 976 B1

daß das Riegel-Gegenstück (39) als Lochplatte ausgebildet ist, in deren Lochungen (38) der zugehörige Querriegel (37,45) zur stufenweise Neigungseinstellung der Aufnahmeplatte (14) eingreift.

5. Geräteträger nach einem der vorhergehenden Ansprüche,
dadurch **gekennzeichnet**,
daß die Aufnahmeplatte (14) beidseitig arretierbar ist.

6. Geräteträger nach einem der vorhergehenden Ansprüche,
dadurch **gekennzeichnet**,
daß der/die beiden Querriegel (37,45) mit einer Betätigungsvorrichtung (19) in Eingriff stehen, die an einer Frontseite der Aufnahmeplatte (14) angeordnet ist.

7. Geräteträger nach einem der vorhergehenden Ansprüche,
dadurch **gekennzeichnet**,
daß die Bolzen (25,26) als Pendelachse ausgebildet und an den Säulen (13) verschraubt sind.

8. Geräteträger nach einem der vorhergehenden Ansprüche,
dadurch **gekennzeichnet**,
daß jede Säule (13) mit einer vertikal verlaufenden Befestigungsnut (31) versehen ist, und daß die Bolzen (25,26) längsverschieblich in der Befestigungsnut (31) lösbar festgeklemmt sind.

9. Geräteträger nach einem der vorhergehenden Ansprüche,
dadurch **gekennzeichnet**,
daß die beiden gehäuseartigen Träger (23,24) unterhalb der Aufnahmeplatte (14) mit einem Querholm (46) gegeneinander abgestützt sind.

10. Geräteträger nach einem der vorhergehenden Ansprüche,
dadurch **gekennzeichnet**,
daß die gehäuseartigen Träger (23,24) die Säulen (13) quer zur Pendelrichtung auf zwei Seiten formschlüssig hintergreifen.

11. Geräteträger nach einem der vorhergehenden Ansprüche, dadurch **gekennzeichnet**, daß der Bodenrahmen (11) mit Laufrollen (12) versehen ist.

12. Geräteträger nach einem der vorhergehenden Ansprüche,
dadurch **gekennzeichnet**,
daß die Betätigungsvorrichtung (19) in Fingerreichweite einer Handhabe (18) für die Aufnahmeplatte (14) angeordnet ist.


**Claims**

1. An apparatus stand for at least one apparatus, i.e. for a monitor or a measuring device, comprising two vertical columns (13) fixed in a predetermined spacing to a base frame (11) and having arranged therebetween at least one mounting plate (14) which is lockable with respect to its height and tilt under different tilt angles, **characterized** in that
each mounting plate (14) is disposed to two oscillating arms (15), each of which may be articulated to the columns (13), in that the oscillating arms (15) are arranged in supports (23,24) in the style of a housing, which are arranged between each mounting plate (14) and the columns (13) and which may be adjusted together with the oscillating arms (15) with respect to the height via horizontal bolts (25,26), in that at least one bar counterpart (39) is fixed to one support (23,24) in the style of a housing, a bar (37,45) being provided which is supported at the mounting plate (14) and deflectable in parallel to the oscillating axis and which is adapted to engage in the bar counterpart in a detachable manner by choice under different angles, for locking the mounting plate (14).

2. The apparatus stand according to claim 1,
**characterized** in that
the side (36) of the support (23,24) in the style of a housing facing the mounting plate (14) is provided with an opening (35) through which the free end of the associated oscillating arm (15) is passed as an abutment (34) for the mounting plate (14) and through which the associated bar (37,45) which is deflectable in parallel to the oscillating axis, is passed into the casing for engaging in the bar counterpart (39).

3. The apparatus stand according to claim 1 or 2,
**characterized** in that
the openings (35) serve as a boundary for the oscillating movement, respectively, for the tilt of the mounting plate (14).

4. The apparatus stand according to one of the claims 1 to 3,
**characterized** in that

5

the bar counterpart (39) is constructed as a perforated plate, in whose holes (38) engage the associated crossbar (37,45) for continuous tilt adjustment of the mounting plate (14).

5. The apparatus stand according to one of the preceding claims,
**characterized** in that
the mounting plate (14) is lockable at both sides.

6. The apparatus stand according to one of the preceding claims,
**characterized** in that
the/the two crossbar(s) (37,45) engage with an operating mechanism (19) located on the front side of the mounting plate (14).

7. The apparatus stand according to one of the preceding claims,
**characterized** in that
the bolts (25,26) are constructed as oscillating axis and screwed to the columns (13).

8. The apparatus stand according to one of the preceding claims,
**characterized** in that
each column (13) is provided with a vertically directed fastening groove (31), and in that the bolts (25, 26) are detachably clamped in longitudinally displaceable manner in the fastening groove (31).

9. The apparatus stand according to one of the preceding claims,
**characterized** in that
the two supports (23,24) in the style of a housing are reciprocally supported with a cross beam (46) below the mounting frame (14).

10. The apparatus stand according to one of the preceding claims,
**characterized** in that
the two supports (23,24) in the style of a housing positively engage behind the columns (13) on two sides transverse to the oscillating directions.

11. The apparatus stand according to one of the preceding claims,
**characterized** in that
the base frame (11) is provided with runners (12).

12. The apparatus stand according to one of the preceding claims,
**characterized** in that
the operating mechanism (19) is located in finger reach of a handle (18) for the mounting plate.


**Revendications**

1. Support d'appareil pour au moins un appareil, par exemple pour un moniteur ou un appareil de mesure comprenant deux colonnes (13) verticales fixées avec un écartement donné sur un socle (11), entre lesquelles est disposé au moins un plateau de réception (14) réglable en hauteur et en inclinaison et qui peut être bloqué avec différents angles d'inclinaison,
caractérisé en ce que
chaque plateau de réception (14) repose sur deux bras oscillants (15), respectivement articulés sur les colonnes (13), les bras oscillants (15) étant prévus dans des supports en forme de boîtiers (23, 24), disposés entre chaque plateau de réception (14) et les colonnes (13) et qui sont susceptibles d'être réglés ensemble en hauteur avec les bras pendulaires (15) à l'aide de goujons horizontaux (25, 26), une contre-pièce de verrouillage (39) étant fixée au moins sur un support (23, 24) en forme de boîtier, dans laquelle vient en prise de manière escamotable un pêne (37, 45) porté par le plateau de réception et se dégageant parallèlement à l'axe oscillant, pour bloquer le plateau de réception (14) à volonté sous différents angles d'inclinaison.

2. Support d'appareil selon la revendication 1,
caractérisé en ce que
la face (36) tournée vers le plateau de réception (14), du support (23, 24) en forme de boîtier est munie d'un orifice (35), à travers lequel passe l'extrémité libre du bras oscillant (15) correspondant, formant un appui (34) pour la plaque de réception (14) et à travers lequel passe le verrou (37, 45) correspondant, se dégageant parallèlement à l'axe oscillant, dans le boîtier, pour venir en prise dans la contre-pièce de verrou (39).

3. Support d'appareil selon la revendication 1 ou 2,
caractérisé en ce que
les orifices (35) sont en forme de moyens limitant un mouvement oscillant ou l'inclinaison du plateau de réception (14).

4. Support d'appareil selon l'une des revendications 1 à 3,
caractérisé en ce que

la contre-pièce de verrouillage (39) est en forme de plaque perforée, dans les trous (38) de laquelle vient en prise le verrou transversal (37, 45) correspondant, pour incliner par échelons, le plateau de réception (14).

5. Support d'appareil selon l'une des revendications précédentes, caractérisé en ce que le plateau de réception (14) se bloque de chaque côté.

6. Support d'appareil selon l'une des revendications précédentes, caractérisé en ce que le ou les verrous transversaux (37, 45) sont en prise avec un dispositif de commande (19) prévu sur une face frontale du plateau de réception (14).

7. Support d'appareil selon l'une des revendications précédentes, caractérisé, en ce que les goujons (25, 26) revêtent la forme d'axes pendulaires et vissés sur les colonnes (13).

8. Support d'appareil selon l'une des revendications précédentes, caractérisé en ce que chaque colonne (13) est munie d'un écrou de fixation (31) dirigé verticalement, et que les goujons (25, 26) sont serrés de manière amovible en coulissement longitudinal dans l'écrou de fixation (31).

9. Support d'appareil selon l'une des revendications précédentes, caractérisé en ce que les deux supports en forme de boîtiers (23, 24) s'appuient mutuellement en-dessous du plateau de réception (14) à l'aide d'un longeron transversal (46).

10. Support d'appareil selon l'une des revendications précédentes, caractérisé en ce que les supports en forme de boîtiers (23, 24) sont en prise par interpénétration de forme sur deux faces avec les colonnes (13) transversalement par rapport à la direction d'oscillation.

11. Support d'appareil selon l'une des revendications précédentes, caractérisé en ce que le socle (11) est muni de galets de roulement(12).

12. Support d'appareil selon l'une des revendications précédentes, caractérisé en ce que le dispositif de commande (19) est prévu à proximité d'une poignée (18) du plateau de réception (14).

FIG. 1

FIG. 2

FIG. 3

FIG. 4

EP 0 331 976 B1